Europäisches Patentamt

European Patent Office

Office européen des brevets

(11) Publication number: **0 469 714 A1**

# EUROPEAN PATENT APPLICATION

(21) Application number: **91305799.8**

(22) Date of filing: **26.06.91**

(51) Int. Cl.⁵: **F16B 37/08**

(30) Priority: **02.08.90 DE 9011343 U**

(43) Date of publication of application:
**05.02.92 Bulletin 92/06**

(84) Designated Contracting States:
**DE ES FR GB IT**

(71) Applicant: **EMHART INC.**
**Drummond Plaza Office Park, 1423, Kirkwood Highway**
**Newark, Delaware 19711(US)**

(72) Inventor: **Schäty, Harald**
**Neuer Weg 4**
**W-6300 Wetzler 17(DE)**

(74) Representative: **Wetters, Basil David Peter et al**
**Emhart Patents Department, Lyn House, 39, The Parade**
**Oadby, Leicester LE2 5BB(GB)**

(54) **Device for removably attaching damping mats.**

(57) Device for removably attaching insulating and sound-damping mats (7) e.g. to a car or vehicle body (6) by a nut (1) engaging a stud (8) secured to the body (6), the nut having a flange (5) to contact the mat and having flexible internal projections (9) which allow it to be pushed over the stud but which can then engage the thread of the stud so that the nut can be unscrewed from the stud when desired.

## FIG. 2

The invention relates to a device for removably attaching insulating and sound-damping mats, in particular on a car or vehicle body, with a nut which can be pressed onto a stud fixed on the body sheet.

Arrangements in which the damping mat is fixed on the surface, for example of a body sheet, are known. However, particular problems arise when removing this mat from the sheet, for example when this mat is worn or damaged.

Accordingly, the object of the invention is to provide a device of the type mentioned above which enables a mat to be removed when necessary from the sheet carrying it without the need to use technically complex means for this purpose. It is also desired to avoid the use of adhesives.

According to the present invention, this object is achieved by providing a tube which surrounds the nut at its lateral periphery and which has, at its base, an annular flange with passages through which fasteners extend which secure the tube to the body sheet, the external diameter of the annular flange being greater than that of the cylindrical portion of the tube, the nut being provided with tooth-like inwardly directed projections which are distributed on its internal periphery and removably engage with the external thread of the stud, and the external periphery of the tube serving as a contact face for the mat.

The essential advantage of this construction of a device according to the invention is that the mat can be exchanged, for example, for a new one without having to remove the tube from the sheet. In other words, the plate can be released from the base of the sheet merely by rotating the nut in an anti-clockwise direction, the tube remaining in its position so that this damping plate can easily be replaced by another one without having to provide additional holding devices for this purpose.

In order that the invention can be better understood, a preferred embodiment will now be described by way of example in greater detail with reference to the accompanying drawings in which:-

Figure 1 shows a plan view of the device, and

Figure 2 shows a sectional view along the arrows shown in Figure 1.

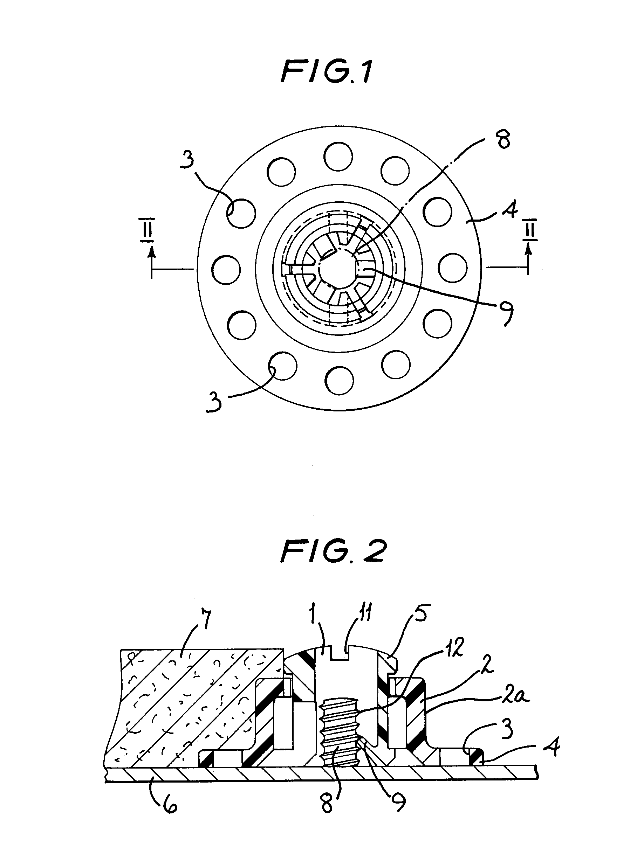

As shown in the drawings, a damping mat which serves, for example, as insulation against heat, cold or sound, lies on a sheet 6 of the body. The damping mat 7 is composed of a conventional damping material known per se. A threaded stud 8 is welded to the surface of the sheet 6. This stud extends from the plane of the sheet substantially at right angles from the surface thereof. A tube 2 having passages 3 in its flange is provided, through which passages fasteners such as threaded bolts or the like can extend to secure the tube to the sheet 6. The tube receives a nut 1 which is hollow in the centre and which has, at its internal periphery, projections 9 (Figure 2) capable of sliding along external thread 12 of the stud 8 owing to their flexibility when the nut 1 is pressed into the tube but which, in the fixed position, engage in the external thread 2a such that the nut 1 can be moved upwardly only by rotation relative to the stud 8 and also relative to the tube 2 as seen in Figure 2.

To enable the nut 1 to perform such a rotation relative to the tube 2, for example, a screwdriver or other suitable tool is inserted into slot 11 in the nut 5 so that the nut 1, as it rotates in an anticlockwise direction, is moved upwardly with its projections 5 and can be separated from the tube so that the damping mat 7, only part of which is shown in Figure 2, can subsequently be raised, for example, from the sheet and can be replaced by a new one. The tube 2 remains in its original position shown in Figure 2 and either serves to receive a new nut 1 or can be released, in particular by releasing the fasteners located in the passages 3 and can also be replaced by a new one if so desired. The stud 8 remains in its original position when the damping mat 7 is exchanged.

As shown in the drawings, the entire device is technically simple and can be used easily to separate a damping mat from a floor and to exchange it for a new one, the floor not necessarily having to be the surface of a body sheet, the invention being applicable wherever an unfixed layer is to be carried by and released from another.

The nut 1 and the tube 2 can initially be in one part, for example by injection moulding in selected plastics material. Only a single tool is required for this purpose. The nut can then be released from the tube 2 by pressure by severing the narrow connecting face between nut 1 and tube 2 and can be pressed onto the stud 8. This simple process of producing nut and tube is, of course, most advantageous.

**Claims**

1. Device for removably attaching insulating, or sound-damping mats, in particular on a car or vehicle body, with a nut which can be pressed onto a stud fixed on the body sheet, characterised by providing a tube (2) which surrounds the nut (1) at its lateral periphery and which has, at its base, an annular flange (4) with passages (3) through which fasteners extend which secure the tube (2) to the body sheet (6), the external diameter of the annular flange (4) being greater than that of the cylindrical portion (2a) of the tube (2), the nut being provided with tooth-like inwardly directed projections (9) which are distributed on its internal periphery and removably engage with the external thread (12) of the stud (8), and the external periphery of the tube (2) serving as a contact face for the mat (10).

2. Device according to claim 1, wherein the nut (1), which can be rotated against the tube (2), carries a head (5) which has a slot (11) in its centre and of which the external diameter is greater than that of the internal axial passage in the tube (2).

3. Device according to claim 1 or 2, characterised in that nut (1) and tube (2) are composed of an abrasion-resistant, low-bending plastics material.

4. Device according to claim 1 or 2, characterised in that the tube (2) and the nut (1) are composed of polyamide.

## FIG.1

## FIG. 2

European
Patent Office

EUROPEAN SEARCH
REPORT

Application Number

EP 91 30 5799

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | DE-U-8 514 481  (USM CORP.)<br>* Page 3, line 28 - page 6, line 6; figures * | 1,3,4 | F 16 B 37/08 |
| A | | 2 | |
| | – – – | | |
| Y | US-A-3 640 327  (JOHN BURT)<br>* Column 2, line 50 - column 4, line 56; figures 1-3 * | 1,3,4 | |
| | – – – | | |
| P,X | DE-U-9 011 343  (EMHART INC.)<br>* Whole document * | 1-4 | |
| | – – – | | |
| A | US-A-4 890 966  (TAKASHI UMEZAWA)<br>– – – – – | | |

TECHNICAL FIELDS
SEARCHED (Int. Cl.5)

F 16 B

The present search report has been drawn up for all claims

| Place of search | Date of completion of search | Examiner |
|---|---|---|
| The Hague | 08 November 91 | ARESO Y SALINAS J. |